# EUROPÄISCHE PATENTSCHRIFT

(11) **EP 2 101 981 B1**
(45) Veröffentlichungstag und Bekanntmachung des Hinweises auf die Patenterteilung: **30.03.2011**
(21) Anmeldenummer: 07847903.7
(22) Anmeldetag: 06.12.2007
(51) Int. Cl.: B29C 47/08, F16H 1/22

(54) **GETRIEBE FÜR EINEN ZWEISCHNECKENEXTRUDER**
GEAR MECHANISM FOR A TWIN-SCREW EXTRUDER
TRANSMISSION POUR UNE EXTRUDEUSE À DOUBLE VIS

(30) Priorität: 21.12.2006 AT 21182006
(43) Veröffentlichungstag der Anmeldung: 23.09.2009
(73) Patentinhaber: Theysohn Extrusionstechnik Gesellschaft m.b.H., 2100 Korneuburg (AT)
(72) Erfinder: SCHNABL, Erwin, 2120 Wolkersdorf im Weinviertel (AT)
(74) Vertreter: Müllner, Martin
(86) Internationale Anmeldenummer: PCT/EP2007/063426
(87) Internationale Veröffentlichungsnummer: WO 2008/077736

(56) Entgegenhaltungen:
- WO-A-97/17185
- WO-A-2007/093228
- DE-A1- 19 828 471
- JP-A- 1 234 223
- US-A- 3 824 875
- US-A- 4 584 903

## Beschreibung

### Technisches Gebiet

Die Erfindung bezieht sich auf ein Getriebe gemäß dem Oberbegriff des Anspruchs 1.

### Stand der Technik

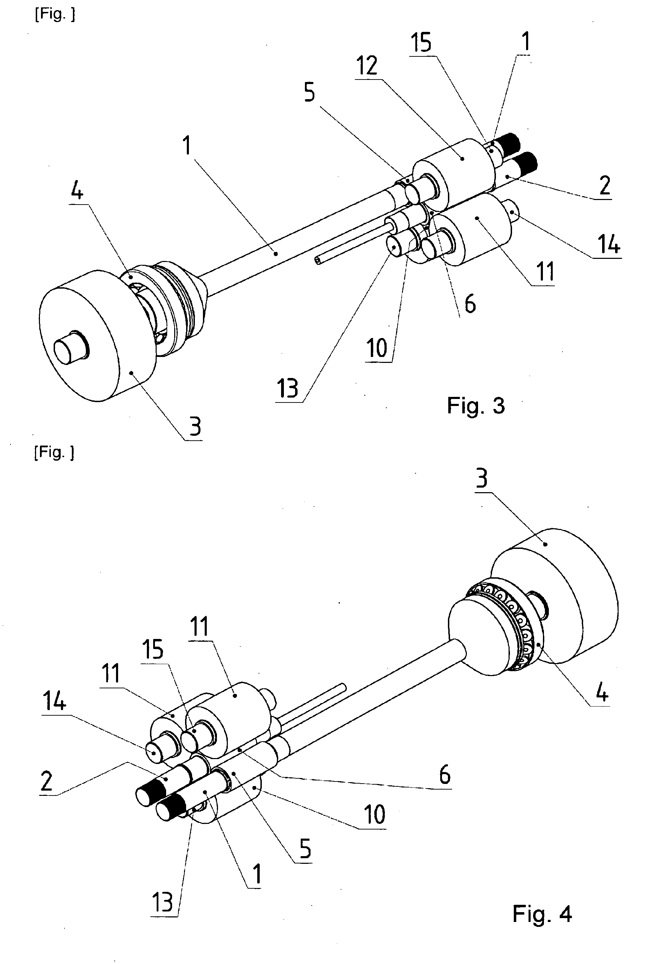

Ein solches Getriebe ist aus Fig. 3 der US 4584903 A bekannt. Bei dieser Ausführungsform werden über zwei Antriebszahnräder über je zwei kämmende Zahnräder insgesamt vier Zwischenwellen angetrieben. Diese kämmen über weitere Zahnräder mit Außenverzahnungen von zwei Hohlrädern, deren Innenverzahnungen mit je drei Zahnrädern kämmen, die ihrerseits mit an den Abtriebswellen angebrachten Ritzeln kämmen. Dabei sind keine unterschiedlich langen Abtriebswellen vorgesehen.

Durch den weitgehend identischen Antrieb der beiden Abtriebswellen kann auf jede Abtriebswelle nur ein so großes Drehmoment übertragen werden, wie dies über die drei Zahnräder, die mit jedem Ritzel kämmen, möglich ist.

Eine ähnliche Konstruktion ist aus der JP 1234223 A bekannt. Unterschiedlich gegenüber der US 4584903 A ist dabei, dass die beiden Abtriebswellen unterschiedlich lang sind und nur die kürzere Abtriebswelle durch ein Hohlrad angetrieben ist. Die längere Abtriebswelle wird direkt über Zahnräder vom Antriebsmotor angetrieben. Außerdem wird das Hohlrad von nur einer Welle mit nur einem Zahnrad angetrieben, was entsprechend hohe radiale Kräfte auf das Hohlrad zur Folge hat.

Auch bei dieser Konstruktion kann auf die kürzere Abtriebswelle nur ein so großes Drehmoment übertragen werden, wie dies über die drei Zahnräder, die mit dem Hohlrad und dem Ritzel kämmen, möglich ist.

### Darstellung der Erfindung

Demgegenüber ist es Aufgabe der vorliegenden Erfindung, ein Getriebe zu schaffen, bei dem das maximal übertragbare Drehmoment noch höher ist.

Dies wird erfingdungsgemäß durch die kennzeichnenden Merkmale von Anspruch 1 errecht. Erfindungsgemäß werden die beiden Abtriebswellen nicht identisch angetrieben. Eine Abtriebswelle ist länger ausgeführt und führt durch das Hohlrad der anderen Antriebswelle hindurch. Auf diese längere Antriebswelle kann man ein (im Prinzip beliebig) großes Antriebszahnrad setzen, sodass das maximal übertragbare Drehmoment nicht durch die maximal zulässige Kraft auf die Zähne beschränkt ist.

Einen Teil dieses Drehmoments leitet man nun vom Ritzel auf der längeren Abtriebswelle in das Ritzel auf der kürzeren Abtriebswelle ein, sodass das Ritzel der kürzeren Abtriebswelle nun von vier Seiten her angetrieben wird - und nicht nur von drei Seiten her, wie gemäß der US 4584903 A. Damit ist das maximal übertragbare Drehmoment um 1/3 größer.

Die radialen Kräfte der beiden Zwischenwellen heben sich zumindest teilweise auf. Auf diese Weise können Querkräfte und elastische Verformungen weitgehend vermieden werden. Dadurch ergibt sich bei dem erfindungsgemäßen Getriebe eine sehr gute Verteilung der zu übertragenden Drehmomente, wodurch die Belastungen für die einzelnen Bauteile gering gehalten werden können und auch bei beengten Platzverhältnissen keine übermäßigen Spannungen in den einzelnen Bauteilen zugelassen werden müssen. Dadurch ergibt sich eine hohe Betriebssicherheit des Getriebes.

In diesem Zusammenhang ist es besonders vorteilhaft, die Merkmale des Anspruchs 2 vorzusehen. Durch diese Maßnahmen heben sich die bei der Übertragung des Drehmoments auftretenden Querkräfte weitgehend gegenseitig auf, sodass das Hohlrad kaum aus der Soll-Position gebracht wird. Der optimale Winkel zwischen den Axialebenen der äußeren Zahnräder und den Axialebenen der Zwischenwellen beträgt ca. 20°, wenn die Dicke des Hohlrades vernachlässigbar klein ist, und steigt mit der Dicke des Hohlrades an. Der optimale Winkel liegt daher zwischen 20° und 30°.

Um die beim Extrudieren mittels der Schnecken auftretenden axialen Kräfte besser aufnehmen zu können ist es vorteilhaft, die Merkmale des Anspruchs 4 vorzusehen. Da die Verzahnungen des Hohlrades in einander entgegengesetzten Richtungen schräg ausgebildet sind, bleibt das Hohlrad in axialer Richtung kräftefrei.

### Kurze Beschreibung der Zeichnungen

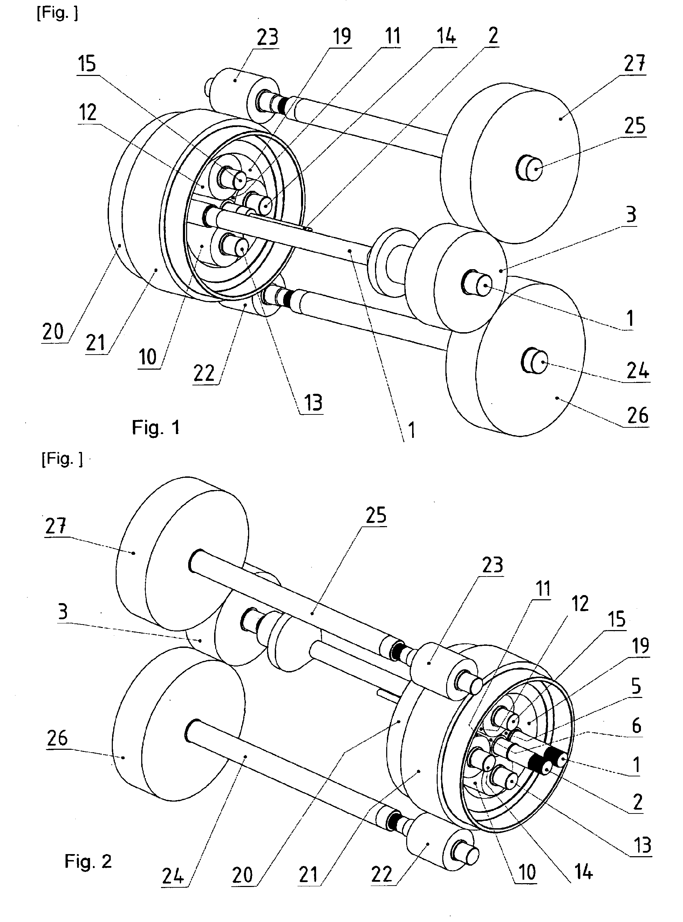

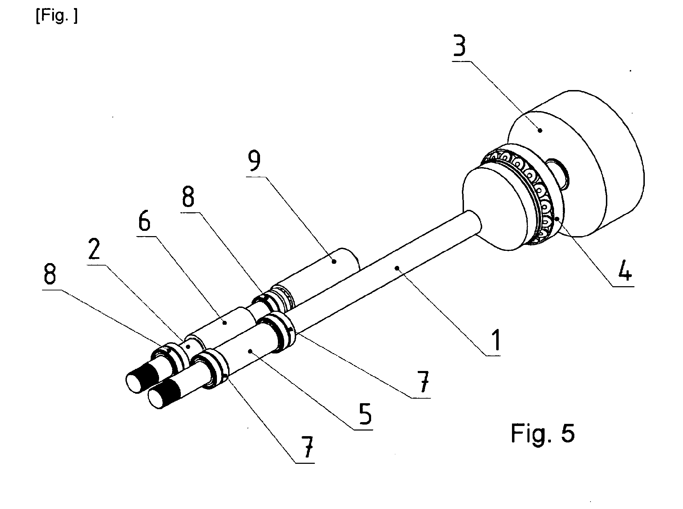

Die Erfindung wird nun anhand der Zeichnungen näher erläutert. Dabei zeigt: Fig. 1 schematisch das erfindungsgemäße Getriebe von der Antriebsseite her; Fig. 2 schematisch das Getriebe nach Fig. 1 von der Abtriebsseite her; Fig. 3 das Getriebe nach Fig. 1 und 2 von der Antriebsseite her, jedoch ohne Hohlrad und Zwischenwellen; Fig. 4 das Getriebe nach Fig. 1 und 2 von der Abtriebsseite her, jedoch ohne Hohlrad und Zwischenwellen; und Fig. 5 schematisch die Lagerung der längeren und der kürzeren Abtriebswellen.

### Bester Weg zur Ausführung der Erfindung

Auf einer längeren Abtriebswelle 1 sitzt ein mit dieser drehfest verbundenes Antriebszahnrad 3, das mit einem nicht dargestellten Ritzel eines Motors kämmt, oder die längere Abtriebswelle 1 ist mit einem Antriebsmotor gekuppelt. Weiters sitzt auf der längeren Abtriebswelle 1 ein Axiallager 4 sowie ein drehfest gehaltenes Ritzel 5, das mit einem mit der kürzeren Abtriebswelle 2 drehfest verbundenen Ritzel 6 kämmt. Auch die kürzere Abtriebswelle 2 weist ein Axiallager 9 auf. Dieses ist wegen der Nähe der längeren Abtriebswelle 1 im Durchmesser beschränkt und vorzugsweise als Tandemlager ausgebildet.

Die Ritzel 5, 6 weisen eine Schrägverzahnung auf. Diese Schrägverzahnung ist so gewählt, dass die kürzere Antriebswelle 2 in Richtung Schnecke gedrückt wird und so die auf das Lager 9 der kürzeren Antriebswelle wirkenden axialen Kräfte bei ansteigendem Drehmoment verhältnismäßig kleiner werden. Dadurch steigen zwar die axialen Kräfte auf die längere Antriebswelle 1, doch ist dies nicht problematisch, da das Axiallager 4 größer gebaut werden kann.

Wie aus Fig. 5 zu ersehen ist, sind neben dem Ritzel 5 Radiallager 7 auf der längeren Abtriebswelle 1 angeordnet. Axial zu diesen versetzt sind Radiallager 8 auf der kürzeren Abtriebswelle 2 angeordnet. Der axiale Versatz ist notwendig, um die Radiallager 7, 8 möglichst groß dimensionieren zu können. Der Abstand der Radiallager 8 vom Ritzel 6 stört nur wenig, weil sich die radialen Kräfte auf das Ritzel 6 ohnehin weitestgehend aufheben, wie noch erläutert werden wird.

Aus Gründen einer besseren Übersichtlichkeit sind die Lager 4, 7, 8 und 9 in den Fig. 1 bis 4 nur zum Teil dargestellt.

Mit dem Ritzel 6 der kürzeren Abtriebswelle 2 kämmen weiters Zahnräder 10, 11, 12, die außerdem mit einer Innenverzahnung 19 eines Hohlrades 20 kämmen.

Dieses Hohlrad 20 ist weiters mit einer Außenverzahnung 21 versehen, wobei die Innenverzahnung 19 und die Außenverzahnung 21 als gegensinnige Schrägverzahnungen ausgebildet sind.

Die Zahnräder 10, 11 bzw. 11, 12 schließen Winkel von jeweils ca. 90° ein, wobei die längere Abtriebswelle 1, die kürzere Abtriebswelle 2 und das Zahnrad 11 in einer Ebene liegen. Damit wird das Ritzel 6 von vier Zahnrädern, die gleichmäßig über dessen Umfang verteilt sind, angetrieben, sodass sich die radialen Kräfte aufheben.

Die Außenverzahnung 21 des Hohlrades 20 kämmt mit Zahnrädern 22, 23, die drehfest mit Zwischenwellen 24, 25 verbunden sind. Auf diesen Zwischenwellen 24, 25 sind weiters Zahnräder 26, 27 drehfest gehalten, die mit dem Antriebszahnrad 3 kämmen.

Die Zwischenwellen 24, 25 sind gegenüber den Zahnrädern 10, 12, bezogen auf die Achse der kürzeren Abtriebswelle 2, um einen Winkel von 20°-30° gegen das Zahnrad 11 versetzt angeordnet, um das Hohlrad 20 weitgehend frei von Querkräften zu halten. Dadurch wird eine gleichmäßige Aufteilung des Drehmoments auf die Zahnräder 10, 11, 12 erreicht.

Die sämtlichen Zahnräder sind - wie an sich bekannt - als Schrägzahnräder ausgebildet, um die axialen Kräfte, die auf die kürzere Abtriebswelle von der zugehörigen Schnecke übertragen werden, teilweise zu kompensieren und so das Axiallager 9, das im Durchmesser beschränkt ist, zu entlasten.

Aufgrund der Ausbildung des Getriebes nach den Fig. 1 bis 5 werden die Belastungen der einzelnen Zahnräder und Wellen gering gehalten, sodass über das Getriebe hohe Drehmomente auf die Schnecken über die beiden Abtriebswellen 1, 2 übertragen werden können. Dadurch kann die hohe Belastbarkeit der Schnecken voll genutzt werden, ohne dass die Gefahr eines Versagens des Getriebes besteht.

## Patentansprüche

1. Getriebe zum Antreiben der Schnecken eines Zweischneckenextruders mit zwei parallelen, gegensinnig drehenden und mit den Schnecken verbindbaren Abtriebswellen (1, 2), wobei beide Abtriebswellen(1,2) ein Ritzel (5 bzw. 6) aufweisen, von denen ein Ritzel (6) über ein mit einer Innenverzahnung (19) versehenes Hohlrad (20) und sowohl mit dieser Innenverzahnung (19) als auch dem Ritzel (6) in Eingriff stehende Zahnräder (10, 11,12) antreibbar ist, wobei das Hohlrad (20) weiters mit einer Außenverzahnung (21) versehen ist, die mit Zahnrädern (22, 23) zweier Zwischenwellen (24, 25) in Eingriff steht, die über weitere Zahnräder (26, 27) vom Antriebsmotor antreibbar sind, **dadurch gekennzeichnet, dass** die beiden Abtriebswellen unterschiedlich lang sind, dass die längere Abtriebswelle (1) ein Antriebszahnrad (3) trägt, das vom Antriebsmotor antreibbar ist, dass die beiden Ritzel (5, 6) direkt miteinander kämmen und dass die Zahnräder (26, 27) der beiden Zwischenwellen vom Antriebszahnrad (3) antreibbar sind.

2. Getriebe nach Anspruch 1, **dadurch gekennzeichnet, dass** die drei Zahnräder (10, 11, 12) in einem Winkel von je ca. 90° angeordnet sind und die Zwischenwellen (24, 25) in Axialebenen angeordnet sind, die zwischen den Axialebenen der äußeren und der mittleren Zahnräder (10, 11, 12) angeordnet sind.

3. Getriebe nach Anspruch 2, **dadurch gekennzeichnet, dass** der Winkel zwischen den Axialebenen der äußeren Zahnräder (10, 12) und den Axialebenen der Zwischenwellen (24, 25) 20°-30° beträgt.

4. Getriebe nach einem der Ansprüche 1 bis 3, **dadurch gekennzeichnet, dass** die Zahnräder, wie an sich bekannt, eine Schrägverzahnung aufweisen, wobei die Innenverzahnung (19) und die Außenverzahnung (21) des Hohlrades (20) in einander entgegengesetzten Richtungen schräg ausgebildet sind.

## Claims

1. A gear mechanism for driving the screws of a twinscrew extruder, comprising two parallel output shafts (1, 2) that rotate in opposite directions and can be connected to the screws, both drive shafts (1, 2) having a pinion (respectively 5, 6), one pinion (6) of the pinions being driveable by way of a gear ring (20) that is provided with internal teeth (19) and by gear wheels (10, 11, 12) that are in engagement both with these internal teeth (19) and with the pinion (6), the gear ring also being provided with external teeth (20) which are in engagement with gear wheels (22, 23) of two intermediate shafts (24, 25) that can be driven by the drive motor by way of further gear wheels (26, 27), **characterized in that** the two output shafts are of different lengths, that the longer output shaft (1) carries a drive gear wheel (3) which can be driven by the drive motor, that the two pinions (5, 6) mesh directly with one another, and that the gear wheels (26, 27) of the two intermediate shafts can be driven by the drive gear wheel (3).

2. A gear mechanism according to Claim 1, **characterized in that** the three gear wheels (10, 11, 12) are arranged at an angle of in each case approximately 90° and the intermediate shafts (24, 25) are located in axial planes which are disposed between the axial planes of the outer and the middle gear wheels (10, 11, 12).

3. A gear mechanism according to Claim 2, **characterized in that** the angle between the axial planes of the outer gear wheels (10, 12) and the axial planes of the intermediate shafts (24, 25) is 20°-30°.

4. A gear mechanism according to any of Claims 1 to 3, **characterized in that** the gear wheels, which are known per se, have helical teeth, the internal teeth (19) and the external teeth (21) of the gear ring (20) being helical in opposite directions.

## Revendications

1. Train d'engrenages destiné à l'entraînement des vis d'une extrudeuse bi-vis avec deux arbres de sortie (1, 2) parallèles tournant en sens contraire et pouvant être reliés avec lesdites vis, les deux arbres de sortie (1, 2) présentant chacun un pignon (5 et 6, respectivement) dont un pignon (6) peut être entraîné par une roue creuse (20) pourvue d'une denture intérieure (19) et des roues dentées (10, 11, 12) s'engageant à la fois dans la denture intérieure (19) et dans le pignon (6), la roue creuse (20) étant en outre pourvue d'une denture extérieure (21) s'engageant dans les roues dentées (22, 23) de deux arbres intermédiaires (24, 25) pouvant être entraînés à travers deux autres roues dentées (26, 27) par le moteur d'entraînement, **caractérisé en ce que** lesdits deux arbres de sortie sont d'une longueur différente, que l'arbre de sortie le plus long (1) porte une roue dentée d'entraînement (3) pouvant être entraînée par ledit moteur d'entraînement, que les deux pignons (5,6) s'engrènent directement et que les roues dentées (26, 27) desdits deux arbres intermédiaires peuvent être entraînées par la roue dentée d'entraînement (3).

2. Train d'engrenages selon la revendication 1, **caractérisé en ce que** les trois roues dentées (10, 11, 12) sont disposées chacune dans un angle d'environ 90° et que les arbres intermédiaires (24, 25) sont disposés dans des plans axiaux qui sont disposés entre les plans axiaux des roues dentées extérieures et centrales (10, 11, 12).

3. Train d'engrenages selon la revendication 2, **caractérisé en ce que** l'angle entre les plans axiaux des roues dentées extérieures (10, 12) et les plans axiaux des arbres intermédiaires (24, 25) est compris entre 20° et 30°.

4. Train d'engrenages selon l'une des revendications 1 à 3, **caractérisé en ce que** les roues dentées, d'une manière connue en soi, présentent une denture hélicoïdale, la denture intérieure (19) et la denture extérieure (21) de la roue creuse (20) présentant des orientations hélicoïdales opposées l'une à l'autre.
